# EUROPÄISCHE PATENTSCHRIFT

(11) **EP 3 113 962 B1**
(45) Veröffentlichungstag und Bekanntmachung des Hinweises auf die Patenterteilung: **09.05.2018**
(21) Anmeldenummer: 15711439.8
(22) Anmeldetag: 04.03.2015
(51) Int. Cl.: B60G 3/28, B60G 7/00, F16F 1/368

(54) **FEDER-LENKER-EINRICHTUNG**
SPRING-ARM DEVICE
DISPOSITIF BRAS-RESSORT

(30) Priorität: 06.03.2014 DE 102014103014
(43) Veröffentlichungstag der Anmeldung: 11.01.2017
(73) Patentinhaber: DANTO Invention GmbH & Co. KG, 64589 Stockstadt am Rhein (DE)
(72) Erfinder: KELLER, Tobias, 67596 Dittelsheim-Hessloch (DE)
(74) Vertreter: Katscher Habermann Patentanwälte
(86) Internationale Anmeldenummer: PCT/EP2015/054505
(87) Internationale Veröffentlichungsnummer: WO 2015/132298

(56) Entgegenhaltungen:
- WO-A1-2011/141538
- WO-A1-2015/090750
- DE-A1- 10 216 244
- DE-T2- 60 102 492
- DE-T2- 69 002 316
- DE-T2- 69 421 680
- US-A- 4 509 774

## Beschreibung

Die Erfindung betrifft eine Feder-Lenker-Einrichtung für ein Kraftfahrzeug. Die Erfindung betrifft außerdem eine Radaufhängung mit mindestens einer Feder-Lenker-Einrichtung.

Radaufhängungen für Kraftfahrzeuge weisen üblicherweise eine Federung auf, um zu erreichen, dass an einem Radträger der Radaufhängung angeordnete Räder eines Kraftfahrzeugs Fahrbahnunebenheiten folgen und so für eine möglichst gleichmäßige Bodenhaftung zu sorgen, wobei die Federung die Räder von dem Rest des Fahrzeugs weitestgehend entkoppelt, sodass der Rest des Fahrzeugs durch die Bodenunebenheiten möglichst nicht in eine Auf- und Abbewegung versetzt wird. Bei modernen Kraftfahrzeugen werden zur Federung üblicherweise Schraubenfedern aus Federstahl eingesetzt, die in einem über dem Radträger angeordneten Dom angeordnet sind und sich gegen diesen abstützen.

Herkömmliche Radaufhängungen weisen zusätzlich sogenannte Lenker auf. Bei den Lenkern handelt es sich um Streben, die im einfachsten Fall stabförmig ausgestaltet sind, wobei diese Streben schwenkbar an dem Radträger und dem Fahrgestell angelengt sind. Über die Lenker werden auf die Räder wirkende Bremskräfte und Kurvenkräfte auf das Fahrgestell übertragen.

Herkömmliche Radaufhängungen sind üblicherweise aus Stahl gefertigt und benötigen aufgrund der Vielzahl von Komponenten einen erheblichen Bauraum. Aus dem Druckschrift US 4 509 774 A und aus dem nicht vorveröffentlichten Druckschrift WO2015 / 090750 A1 sind aus Faserverbundwerkstoff hergestellten Lenker-Feder-Ausrichtungen bekannt, die die Funktionen der Federung und der Lenker in einem Bauteil vereinigen.

Als Aufgabe der Erfindung wird es angesehen, eine hierzu alternative Feder-Lenker-Errichtung bereitzustellen, die die Funktionen der Federung und der Lenker einer Radaufhängung in einem bzw. mehreren gleichartigen Bauteilen vereinigt.

Diese Aufgabe wird gelöst durch eine Feder-Lenker-Einrichtung für ein Kraftfahrzeug mit zwei beabstandet zueinander angeordneten Gurten aus einem ersten Faserverbundwerkstoff mit jeweils in Längsrichtung der Gurte ausgerichteten Fasern und mit einem die Gurte verbindenden Steg aus einem zweiten Faserverbundwerkstoff mit unter positiven Winkeln zu den Längsrichtungen der Gurte ausgerichteten Fasern, wobei die Feder-Lenker-Einrichtung in einander gegenüberliegenden Endbereichen als Teil einer Radaufhängung an Fahrzeugteilen festgelegt werden kann, wobei die Endbereiche einander zugeordnete Endabschnitte der beiden Gurte und jeweils einen die Endabschnitte der Gurte verbindenden Endabschnitt des Stegs umfassen, sodass von den Gurten jeweils in Längsrichtung über die Endbereiche in die Feder-Lenker-Einrichtung eingeleitete Kräfte übertragen werden können, sodass die Gurte einer durch in einer Normalenrichtung des Stegs wirkende Kräfte verursachten Verformung der Feder-Lenker-Einrichtung mit einer Federkraft entgegenwirken und sodass von dem Steg in Querrichtung auf die Feder-Lenker-Einrichtung wirkende Kräfte auf die Endbereiche übertragen werden.

Sowohl die Gurte als auch der Steg können aus handelsüblichen Prepregs hergestellt werden. Auf diese Weise ist eine besonders kostengünstige Herstellung der Feder-Lenker-Einrichtung möglich. Auf Grund des erheblich geringeren Gewichts von Faserverbundwerkstoffen im Verhältnis zu Stahlkomponenten ist auch das Gewicht der erfindungsgemäßen Feder-Lenker-Einrichtung im Vergleich zu einer herkömmlichen Stahlfederung und herkömmlichen Lenkern erheblich reduziert. Auf Grund der Integration der Funktion der Federung und der Lenker in eine Feder-Lenker-Einheit kann zudem der erforderliche Bauraum für die Radaufhängung deutlich reduziert werden.

Die Gurte sind stabförmig ausgestaltet, also langgestreckte Teile, die in der Längsrichtung verlaufende Fasern aufweisen. Werden diese Gurte in ihren einander gegenüberliegenden Endabschnitten eingespannt und diese Endabschnitte relativ zueinander parallel verlagert, so werden die Gurte elastisch verformt. Die unidirektional verlaufenden Fasern wirken der Verformung mit einer Rückstellkraft entgegen, die im Wesentlichen von dem verwendeten Faserverbundwerkstoff sowie den Abmessungen der Gurte abhängt. Durch die Gurte wird daher die Federung für die Radaufhängung bereitgestellt. Auf Grund der Ausrichtung der Fasern der Gurte sind die Gurte auch dazu geeignet, in Faserrichtung über die Endbereiche in die Gurte eingeleitete Kräfte wie beispielsweise Kurvenkräfte von dem Radträger auf das Fahrgestell zu übertragen. Jedoch sind die Gurte ebenfalls aufgrund ihrer Faserausrichtung nur eingeschränkt dazu geeignet, die beim Bremsen des Kraftfahrzeugs auf die Gurte in Querrichtung wirkenden Bremskräfte sowie an den Gurten anliegenden Bremsmomente von den Radträgern auf den Fahrzeugrahmen zu übertragen.

Zu diesem Zweck werden die Gurte durch den Steg miteinander verbunden. Bei dem Steg handelt es sich um ein flächig ausgestaltetes Teil mit in unterschiedlichen Richtungen ausgerichteten Fasern, über die Bremskräfte zwischen den Endbereichen der Feder-Lenker-Einrichtung übertragen werden können, sodass ein Verwinden der Feder-Lenker-Einrichtung vermieden wird. Bei dem Steg handelt es sich also um ein Schubfeld zur Übertragung der in Querrichtung wirkenden Kräfte und zur Übertragung der um die Längsrichtung wirkenden Momente von dem Radträger auf den Fahrzeugrahmen. Zu diesem Zweck ist es erforderlich, dass die Fasern des zweiten Faserverbundwerkstoffs nicht parallel zu den Fasern der Gurte ausgerichtet sind, sondern unter einem Winkel zu den Fasern des ersten Faserverbundwerkstoffs verlaufen.

Die Stege weisen vorteilhafterweise im Wesentlichen die gleiche Länge auf wie die Gurte und sind vorteilhafterweise erheblich breiter als die Gurte, um die erforderliche Verwindungssteifigkeit der Feder-Lenker-Einrichtung zu ermöglichen. Die Dicke des Stegs ist dabei so angepasst, dass der Steg die maximal auftretenden Bremskräfte und Bremsmomente von dem Radträger auf den Fahrzeugrahmen übertragen kann.

Um die Federwirkung der Feder-Lenker-Einrichtung anzupassen, ist erfindungsgemäß auch vorgesehen, dass zwischen den Gurten im Bereich des Stegs weitere Gurte angeordnet sind. Diese Gurte liegen zweckmäßigerweise an Außenflächen des Stegs an dem Steg an, sodass der Steg durch die zusätzlichen Gurte nicht unterbrochen ist.

Vorteilhafterweise ist erfindungsgemäß vorgesehen, dass die Gurte einen gleichmäßigen oder einen dem Spannungsverlauf angepassten Überstand über einander gegenüberliegende Stegflächen des Stegs aufweisen. Der Überstand kann an den Spannungsverlauf angepasst werden, der in Faserlängsrichtung beim Einfedern in einer relativen Normalenrichtung durch die Stauchung bzw. Dehnung der Gurtrandschichten in denselben entsteht. Bei einer Parallelverschiebung der Endbereiche relativ zueinander wird eine erste Seitenfläche der Feder-Lenker-Einrichtung gestaucht, während eine der ersten Seitenfläche gegenüberliegende zweite Seitenfläche der Feder-Lenker-Einrichtung gedehnt wird. Durch diese Stauchung und Dehnung wird in den Gurten die die Federwirkung hervorrufende Rückstellkraft erzeugt. Auf Grund der Faserausrichtungen der Fasern der Gurte in Richtung der Stauchung bzw. Dehnung sind die Gurte insbesondere hinsichtlich dieser Beanspruchungen elastisch. Demgegenüber sollte eine starke Dehnung bzw. Stauchung der einander gegenüberliegenden Stegflächen des Stegs aufgrund der Ausrichtung der Fasern des zweiten Faserverbundwerkstoffs vermieden werden, da die Festigkeit des Stegs bezüglich einer solchen Beanspruchung geringer ist.

Dies wird erfindungsgemäß durch die Ausgestaltung der Feder-Lenker-Einrichtung mit gleichmäßig oder dem Spannungsverlauf angepasst über die Stegflächen hinausragenden Gurten ermöglicht. Bei einer Auslenkung der Feder-Lenker-Einrichtung werden die einander gegenüberliegenden Gurtflächen gedehnt bzw. gestaucht, wobei die Dehnung bzw. Stauchung längs einer Mittellinie des Gurts 0 ist. Indem der Steg in dem Bereich dieser Mittellinie an den Gurten angeordnet wird, wird eine sehr geringe Dehnung bzw. Stauchung der einander gegenüberliegenden Stegflächen ermöglicht, da die maximale Dehnung bzw. Stauchung in durch die Gurtflächen definierten und einander gegenüberliegenden Ebenen der Feder-Lenker-Einrichtung auftritt. Der Steg ist erfindungsgemäß daher zweckmäßigerweise im Bereich der Mittellinien der Gurte angeordnet, wobei diese Mittellinie auch als neutrale Faser bezeichnet wird, da längs der Mittellinie durch den Gurt verlaufende Fasern bei einer Parallelverschiebung der Endabschnitte der Gurte relativ zueinander weder gedehnt noch gestaucht werden.

Zur Herstellung der Feder-Lenker-Einrichtung werden vorteilhafterweise Prepregs verwendet. Zur Herstellung des Stegs wird zunächst ein flächiges Teilstück aus einem Prepreg des zweiten Faserverbundwerkstoffs herausgeschnitten. Die Gurte bestehen vorteilhafterweise aus zwei Gurtstreifen, die ebenfalls durch Schneiden aus einem Prepreg aus dem ersten Faserverbundwerkstoff hergestellt werden. Die Feder-Lenker-Einrichtung wird aus dem vorbereiteten Steg und dem vorbereiteten Gurtstreifen dadurch hergestellt, dass die Gurtstreifen in Randbereichen des Stegs an den einander gegenüberliegenden Stegflächen angeordnet werden, sodass jeweils zwei Gurtstreifen einander gegenüberliegend an einem Randbereich des Stegs angeordnet sind. Anschließend werden die Gurtstreifen an den Steg gepresst, sodass sich die Matrizes des ersten Faserverbundwerkstoffs und des zweiten Faserverbundwerkstoffs miteinander verbinden und die Gurtstreifen und der Steg ein integrales Bauteil bilden.

Um die an der Feder-Lenker-Einrichtung anliegenden Bremskräfte und Bremsmomente über den Steg übertragen zu können und gleichzeitig eine möglichst einfache und kostengünstige Herstellung der Feder-Lenker-Einrichtung zu ermöglichen ist erfindungsgemäß vorgesehen, dass die Fasern des zweiten Faserverbundwerkstoffs gekreuzt zueinander verlaufen. Durch solche gekreuzt zueinander verlaufenden Fasern können die Bremskräfte und Bremsmomente besonders wirkungsvoll von dem Radträger auf den Fahrzeugrahmen und umgekehrt übertragen werden. Zudem sind Faserverbundwerkstoffe mit gekreuzten Fasern beispielsweise als sogenannte 45-Grad-Prepregs handelsüblich und daher kostengünstig einsetzbar.

Es ist auch möglich und erfindungsgemäß vorgesehen, dass die Feder-Lenker-Einrichtung in den Endbereichen nicht vollständig eingespannt wird, sondern beispielsweise punktuell in den Endabschnitten der Gurte an dem Radträger und dem Fahrzeugrahmen festgelegt wird. Um bei einer solchen Festlegung der Feder-Lenker-Einrichtung eine möglichst große Stabilität der Feder-Lenker-Einrichtung und eine ausreichende Kraftübertragung zwischen den Einspannstellen zu ermöglichen, ist erfindungsgemäß vorgesehen, dass in den Endabschnitten des Stegs stabförmig ausgestaltete Pfosten mit in Längsrichtung der Pfosten bzw. in Querrichtung der Feder-Lenker-Einrichtung unidirektional verlaufenden Fasern angeordnet sind.

Vorteilhafterweise ist erfindungsgemäß vorgesehen, dass die Gurte und der Steg in einer vorgespannten Position miteinander verbunden werden, sodass die Feder-Lenker-Einrichtung in einem unbelasteten Zustand einen S-Profilförmigen Querschnitt längs einer die Endbereiche verbindenden Mittelachse aufweist. Es ist erfindungsgemäß auch vorgesehen, dass die Feder-Lenker-Einrichtung so vorgeformt ist, dass sie einen bogenförmigen Verlauf aufweist. Auf diese Weise wird erreicht, dass die in dem Kraftfahrzeug montierte Feder-Lenker-Einrichtung unter Einwirkung der Gewichtskraft des Kraftfahrzeugs in eine Nulllage ausgelenkt ist, in der die Feder-Lenker-Einrichtung einen im Wesentlichen ebenen Verlauf aufweist. Dadurch steht während des Betriebs des Kraftfahrzeugs die maximal mögliche Auslenkung der Feder-Lenker-Einrichtung für die Federung des Kraftfahrzeugs zur Verfügung.

Bei einer besonders vorteilhaften Ausgestaltung der erfindungsgemäßen Feder-Lenker-Einrichtung ist vorgesehen, dass die Gurte trapezförmig unter einem Trapezwinkel zueinander ausgerichtet sind. Auf diese Weise kann eine besonders große Stabilität der Feder-Lenker-Einrichtung erreicht werden.

Um ein möglichst gutes Fahrverhalten des Kraftfahrzeugs zu ermöglichen, wenn die Feder-Lenker-Einrichtung in dem Kraftfahrzeug montiert ist, ist erfindungsgemäß vorgesehen, dass eine Federkennlinie der Feder-Lenker-Einrichtung linear bis progressiv ist. Dies kann durch die Verwendung der Gurte aus dem ersten Faserverbundwerkstoff besonders einfach im Vergleich zu Stahlfedern erreicht werden.

Die Erfindung betrifft auch eine Radaufhängung mit mindestens einer wie voranstehend beschriebenen Feder-Lenker-Einrichtung. Erfindungsgemäß ist ein Endbereich der Feder-Lenker-Einrichtung an einem Radträger der Radaufhängung festgelegt, wobei ein dem festgelegten Endbereich gegenüberliegender Endbereich mit einem Fahrgestell eines Kraftfahrzeugs verbunden werden kann. Da auf diese Weise auf eine zusätzliche Federung und weitere Lenker verzichtet werden kann, ist die erfindungsgemäße Radaufhängung besonders leicht und erfordert einen geringeren Bauraum als herkömmliche Radaufhängungen.

Vorteilhafterweise weist die Radaufhängung zwei Feder-Lenker-Einrichtungen auf, wobei diese Feder-Lenker-Einrichtungen zumindest annähernd parallel versetzt zueinander an dem Radträger angeordnet sind. Die Seitenflächen der verwendeten Feder-Lenker-Einrichtungen sind im Allgemeinen vorteilhafterweise so an dem Radträger angeordnet und ausgerichtet, dass die Querrichtung der Feder-Lenker-Einrichtungen nahezu achsparallel zu einer Fahrzeuglängsachse ausgerichtet ist. Dabei kann ein Winkel zwischen der Querrichtung der Feder-Lenker-Einrichtung und der Längsachse des Kraftfahrzeugs in der Ruhestellung des Kraftfahrzeugs vorgesehen sein, wobei ein solcher Winkel zudem durch das Ein- und Ausfedern der Feder-Lenker-Einrichtung hervorgerufen wird. Dieser Winkel ist aber in jedem Falle kleiner als 90 Grad, üblicherweise kleiner als 45 Grad und liegt vorteilhafterweise in einem Bereich zwischen 0 und 20 Grad.

Bei einer besonders vorteilhaften Ausgestaltung der Radaufhängung ist erfindungsgemäß vorgesehen, dass die Radaufhängung eine Dämpfungseinrichtung aufweist, wobei die Dämpfungseinrichtung an dem Radträger schwenkbar gelagert angeordnet ist und mit dem Fahrgestell verbunden werden kann, wobei die Dämpfungseinrichtung eine Feder mit einer nichtlinearen Federkennlinie aufweist, die so ausgestaltet und angeordnet ist, dass ein Anschlagen der Dämpfungseinrichtung an Endanschlägen der Dämpfungseinrichtung vermieden wird.

Die Feder-Lenker-Einrichtung der Radaufhängung ist vorteilhafterweise so ausgestaltet und an dem Radträger angeordnet, dass die Feder-Lenker-Einrichtung als Querstabilisator und/oder als Längsstabilisator dient. Auf diese Weise wird durch die erfindungsgemäße Feder-Lenker-Einrichtung zusätzlich die Funktion des Querstabilisators bzw. des Längsstabilisators übernommen, sodass das Gewicht, der erforderliche Bauraum und die Herstellungskosten der Radaufhängung weiter reduziert werden können.

Vorteilhafterweise ist erfindungsgemäß vorgesehen, dass die Radaufhängung zwei Feder-Lenker-Einrichtungen aufweist, die beabstandet zueinander an dem Radträger so angeordnet und ausgestaltet sind, dass die Feder-Lenker-Einrichtung als Längslenker, oberer Querlenker, unterer Querlenker, Stabilisator und Feder wirken. Um die Feder-Lenker-Einrichtungen entsprechend auszugestalten und anzuordnen, werden in Kenntnis des mit der Radaufhängung auszurüstenden Kraftfahrzeugs mit Hilfe bekannter Optimierungsverfahren eine Gurtdicke, eine Gurtbreite, die Stegdicke, ein Abstand der Feder-Lenker-Einrichtungen in dem Bereich des Radträgers zueinander, der Trapezwinkel, der Winkel zwischen der Querrichtung der Feder-Lenker-Einrichtung und der Fahrzeuglängsachse sowie ein Winkel der Querrichtungen der beiden Feder-Lenker-Einrichtungen relativ zueinander bestimmt. Zu diesem Zweck werden die Radaufhängungen auf bekannte Art und Weise modelliert und hinsichtlich der angegebenen Parameter optimiert. Hinsichtlich der Anordnung der Feder-Lenker-Einrichtung an dem Radträger sind auch noch weitere Optimierungsgrößen denkbar, wie beispielsweise ein Abstand von Mittelachsen der Feder-Lenker-Einrichtungen, die in den jeweiligen Normaleinrichtungen der Feder-Lenker-Einrichtungen ausgerichtet sind.

Weitere vorteilhafte Ausgestaltungen der erfindungsgemäßen Feder-Lenker-Einrichtung werden anhand von in der Zeichnung dargestellten Ausführungsbeispielen näher erläutert.

Es zeigt:
Figur 1 eine schematisch dargestellte Draufsicht auf eine teilweise geschnitten dargestellte Feder-Lenker-Einrichtung,
Figur 2 eine schematisch dargestellte Draufsicht auf eine teilweise geschnitten dargestellte, trapezförmig ausgestaltete Feder-Lenker-Einrichtung,
Figur 3 eine schematisch dargestellte Ansicht zweier beabstandet zueinander angeordneter, trapezförmig ausgestalteter Feder-Lenker-Einrichtungen,
Figur 4 eine schematische Darstellung zweiter beabstandet zueinander angeordneter Feder-Lenker-Einrichtungen, wobei die Feder-Lenker-Einrichtungen bogenförmig gestaltet sind,
Figur 5 eine schematische Darstellung zweier beabstandet zueinander ausgerichteter Feder-Lenker-Einrichtungen, wobei die Feder-Lenker-Einrichtungen S-förmig gestaltet sind,
Figur 6 eine schematische Darstellung zweier beabstandet zueinander angeordneter, trapezförmiger Feder-Lenker-Einrichtungen, wobei die Feder-Lenker-Einrichtungen S-förmig gestaltet sind,
Figur 7 eine schematische Darstellung einer an einem Kraftfahrzeug angeordneten Radaufhängung,
Figur 8 eine schematische Darstellung einer an einem Kraftfahrzeug angeordneten Radaufhängung mit einer Dämpfungseinrichtung.

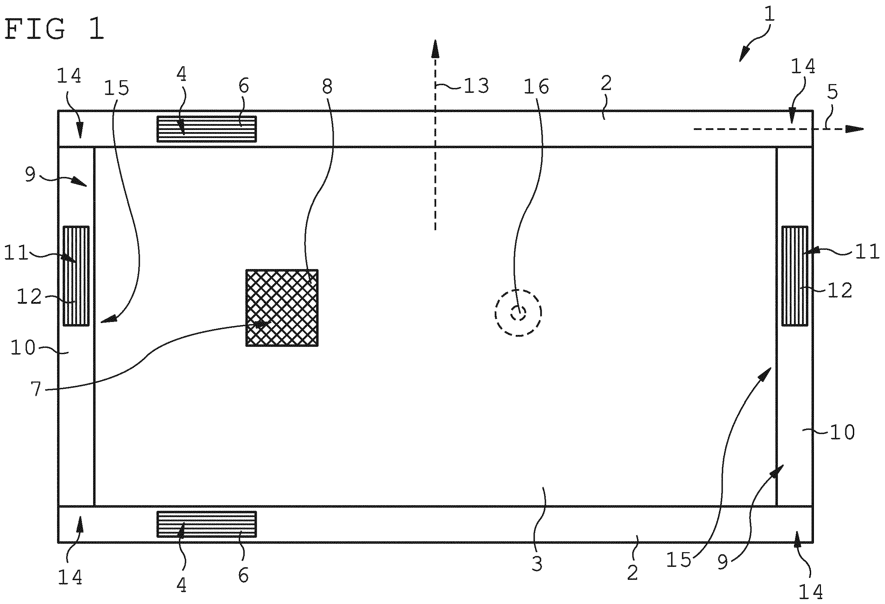

In Figur 1 ist schematisch eine Draufsicht auf eine teilweise geschnitten dargestellte Feder-Lenker-Einrichtung 1 dargestellt. Die Feder-Lenker-Einrichtung 1 weist zwei beabstandet zueinander angeordnete Gurte 2 auf, die durch einen Steg 3 miteinander verbunden sind. Die Gurte 2 bestehen aus einem ersten Faserverbundwerkstoff 4 mit jeweils in Längsrichtung 5 der Gurte 2 ausgerichteten Fasern 6. Der Steg 3 besteht aus einem zweiten Faserverbundwerkstoff 7 mit unter positiven Winkeln zu den Längsrichtungen 5 der Gurte 2 ausgerichteten Fasern 8. Die Gurte 2 und der Steg 3 sind aus Prepregs hergestellt.

Der Steg 3 weist in einander gegenüberliegenden Endabschnitten 9 des Stegs 3 angeordnete Pfosten 10 auf, wobei die Pfosten 10 aus einem dritten Faserverbundwerkstoff 11 hergestellt sind. Fasern 12 der Pfosten 10 sind unidirektional in einer Querrichtung 13 der Feder-Lenker-Einrichtung 1 ausgerichtet.

Von den Endabschnitten 9 der Stege 3 sowie von jeweils einander gegenüberliegenden Endabschnitten 14 der Gurte 2 werden zwei einander gegenüberliegende Endbereiche 15 der Feder-Lenker-Einrichtung 1 definiert. In den Endbereichen 15 kann die Feder-Lenker-Einrichtung 1 an Fahrzeugteilen wie beispielsweise einem Radträger und einem Fahrzeugrahmen festgelegt werden. Wenn die Endbereiche 15 der Feder-Lenker-Einrichtung 1 relativ zueinander in Normalenrichtung 16 bzw. entgegen der Normalenrichtung 16 parallel verlagert werden, werden die Gurte 2 und der Steg 3 verformt. Dieser Verformung wirken die Gurte 2 mit einer Rückstellkraft entgegen, sodass von den Gurten 2 eine Federwirkung ausgeht.

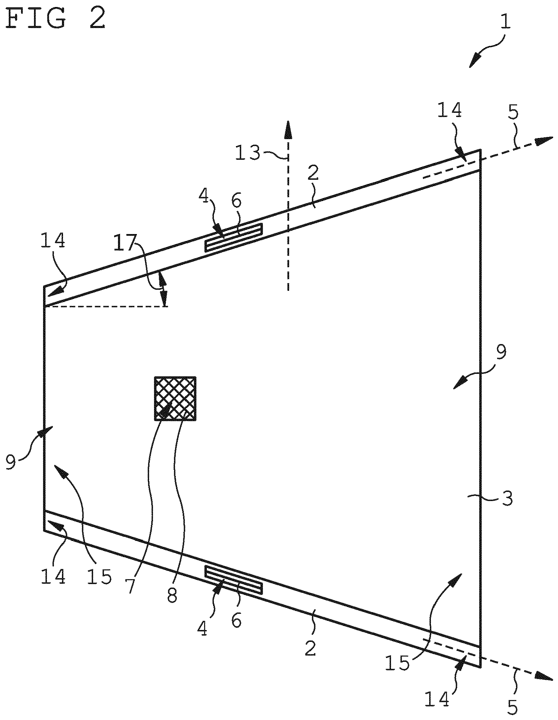

Figur 2 zeigt eine schematisch dargestellte Draufsicht auf eine teilweise geschnitten dargestellte trapezförmig ausgestaltete Feder-Lenker-Einrichtung 1. Gurte 2 der Feder-Lenker-Einrichtung 1 sind trapezförmig unter einem Trapezwinkel 17 zueinander ausgerichtet.

Im Gegensatz zu der in Figur 1 dargestellten Feder-Lenker-Einrichtung 1, weist die in Figur 2 dargestellte Feder-Lenker-Einrichtung 1 keine Pfosten auf. Auf die Pfosten kann verzichtet werden, sofern die Feder-Lenker-Einrichtung 1 in dem Endbereich 15 vollständig beispielsweise klemmend an Fahrzugteilen festgelegt wird.

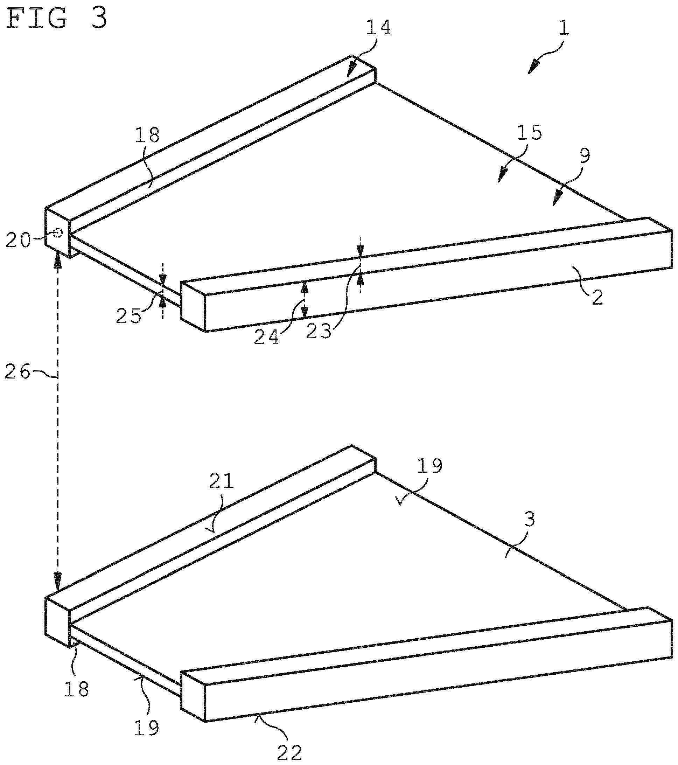

In den im Folgenden beschriebenen Figuren 3 bis 6 ist jeweils eine Komponente mehrerer gleichartiger Komponenten exemplarisch mit einem Bezugszeichen gekennzeichnet.

In Figur 3 ist schematisch eine Ansicht zweier beabstandet zueinander angeordneter, trapezförmig ausgestalteter Feder-Lenker-Einrichtungen 1 dargestellt. Die Gurte 2 der Feder-Lenker-Einrichtungen 1 weisen jeweils einen Überstand 18 über einander gegenüberliegenden Stegflächen 19 der Stege 3 auf. Die Stege 3 sind jeweils im Bereich einer Mittellinie 20 bzw. einer neutralen Faser angeordnet. Bei einer relativen Parallelverlagerung der Endbereiche 15 der Feder-Lenker-Einrichtungen 1 werden jeweils einander gegenüberliegende Gurtflächen 21 und 22 der Gurte 2 stark gedehnt bzw. gestaucht. Die längs der jeweiligen Mittellinie 20 verlaufende neutrale Faser wird bei dieser Parallelverlagerung der Endbereiche 15 weder gestaucht noch gedehnt. Durch die Anordnung der Stege 3 im Bereich der Mittellinien 20 sowie durch die Überstände 18 wird daher erreicht, dass die Stegflächen 19 nur geringfügig gedehnt bzw. gestaucht werden.

Eine Gurtbreite 23, eine Gurtdicke 24, eine Stegdicke 25 sowie ein Abstand 26 mit dem die Feder-Lenker-Einrichtungen 1 an einem nicht dargestellten Radträger festgelegt werden, können als Zielgrößen eines bekannten Optimierungsverfahrens zur Bestimmung konkreter Parameter für eine vorgegebene Kraftfahrzeuganwendung herangezogen werden.

Die dargestellte Anordnung der beiden Feder-Lenker-Einrichtungen 1 entspricht prinzipiell einer möglichen Anordnung an einem Radträger und einem Fahrzeugrahmen, wobei die Seite der Feder-Lenker-Einrichtung 1, bei der die Feder-Lenker-Einrichtung auf Grund der trapezförmigen Ausgestaltung eine geringere Breite aufweist, dem Radträger zugeordnet ist. Die Feder-Lenkereinrichtungen 1 werden vorteilhafterweise und für alle Ausführungsformen zwischen dem Radträger und dem Fahrzeugrahmen so angeordnet, dass die Stegflächen 19 zumindest in einem Federzustand im Wesentlichen horizontal ausgerichtet sind.

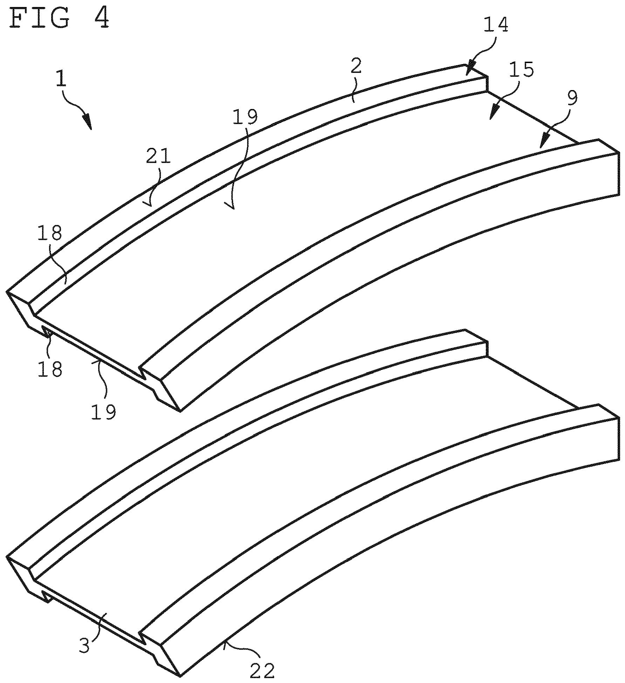

In den Figuren 4, 5 und 6 sind jeweils zwei beabstandet zueinander angeordnete Feder-Lenker-Einrichtungen 1 dargestellt. Diese Feder-Lenker-Einrichtungen 1 weisen jeweils eine Vorspannung auf, die so gewählt ist und an ein Kraftfahrzeuggewicht angepasst ist, dass die Feder-Lenker-Einrichtungen 1 in einer Einbaulage im Kraftfahrzeug unter Einfluss der von einer Kraftfahrzeugmasse hervorgerufenen und auf die Feder-Lenker-Einrichtungen 1 wirkenden Gewichtskraft in eine im Wesentlichen ebene Form verformt werden. Auf diese Weise steht in der Einbaulage der maximal mögliche Federweg der Feder-Lenker-Einrichtungen 1 zur Verfügung.

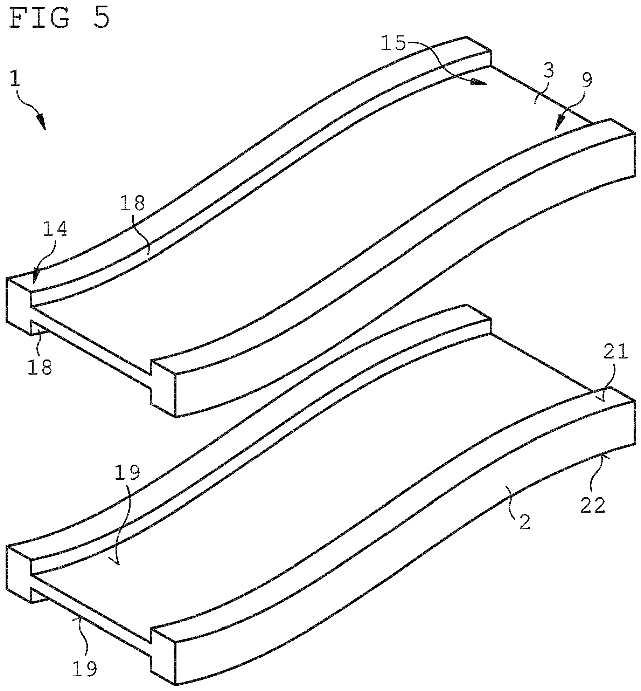

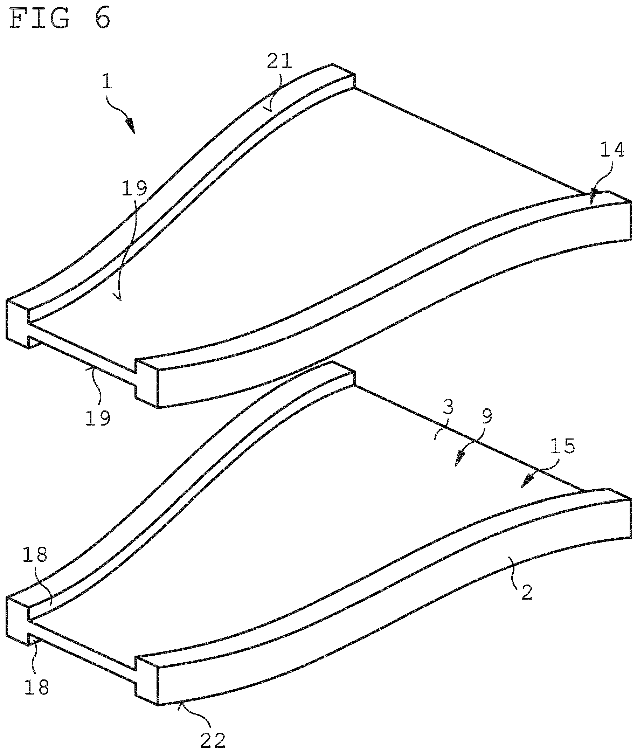

Die in Figur 4 dargestellten Feder-Lenker-Einrichtungen 1 sind bogenförmig vorgespannt und die in den Figuren 5 und 6 dargestellten Feder-Lenker-Einrichtungen 1 sind S-förmig vorgespannt. Zudem sind die in der Figur 6 dargestellten Feder-Lenker-Einrichtungen 1 trapezförmig ausgestaltet.

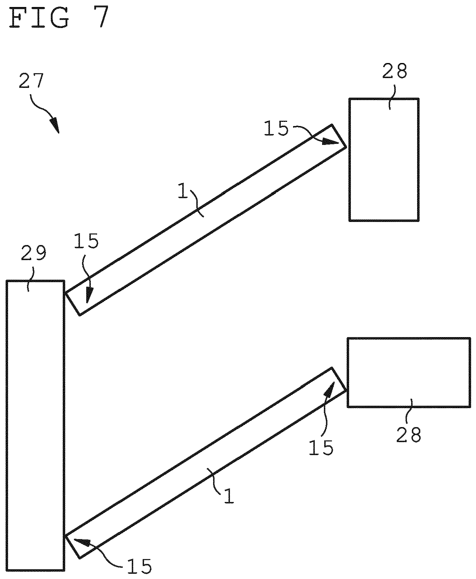

Figur 7 zeigt eine schematische Darstellung einer Radaufhängung 27, die an Holmen 28 eines Fahrzeugrahmens über Feder-Lenker-Einrichtungen 1 angeordnet ist. Die Feder-Lenker-Einrichtungen 1 sind in einem Endbereich 15 an einem Radträger 29 der Radaufhängung 27 festgelegt und in einem gegenüberliegenden Endbereich 15 an den Holmen 28 festgelegt. Die Darstellung zeigt eine schematische Seitenansicht (in Fahrtrichtung) auf die Feder-Lenker-Einrichtungen 1.

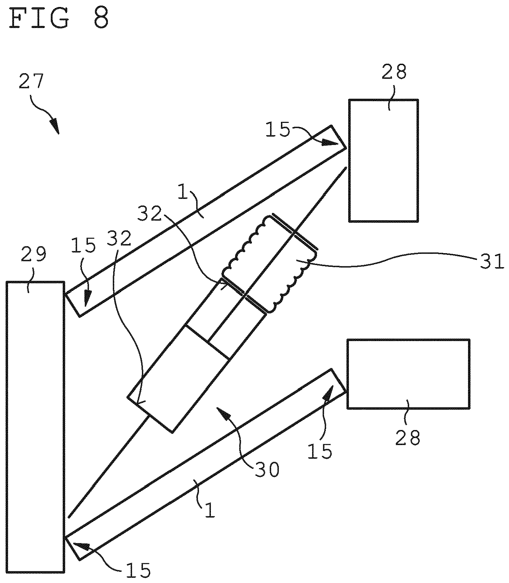

Figur 8 zeigt eine schematische Darstellung einer Radaufhängung 27 mit zwei Feder-Lenker-Einrichtungen 1, wobei die Radaufhängung eine Dämpfungseinrichtung 30 aufweist, die an dem Radträger 29 schwenkbar gelagert angeordnet ist und mit einem Holm 28 eines Fahrzeugträgers verbunden ist. Die Dämpfungseinrichtung 30 weist eine Feder 31 mit einer nichtlinearen Federkennlinie auf, wobei die Feder 31 so ausgestaltet und angeordnet ist, dass ein Anschlagen der Dämpfungseinrichtung 30 an Anschlägen 32 vermieden wird.

## Patentansprüche

1. Feder-Lenker-Einrichtung (1) für ein Kraftfahrzeug mit zwei beabstandet zueinander angeordneten Gurten (2) aus einem ersten Faserverbundwerkstoff (4) mit jeweils in Längsrichtung (5) der Gurte (2) ausgerichteten Fasern (6) und mit einem die Gurte (2) verbindenden Steg (3) aus einem zweiten Faserverbundwerkstoff (7) mit unter positiven Winkeln zu den Längsrichtungen (5) der Gurte (2) ausgerichteten Fasern (8), wobei die Feder-Lenker-Einrichtung (1) in einander gegenüberliegenden Endbereichen (15) als Teil einer Radaufhängung (27) an Fahrzeugteilen festgelegt werden kann, wobei die Endbereiche (15) einander zugeordnete Endabschnitte (14) der beiden Gurte (2) und jeweils einen die Endabschnitte (14) der Gurte (2) verbindenden Endabschnitt (9) des Stegs (3) umfassen, sodass von den Gurten (2) jeweils in Längsrichtung (5) über die Endbereiche (15) in die Feder-Lenker-Einrichtung (1) eingeleitete Kräfte übertragen werden können, sodass die Gurte (2) einer durch in einer Normalenrichtung (16) des Stegs (3) wirkenden Kräften verursachten Verformung der Feder-Lenker-Einrichtung (1) mit einer Federkraft entgegen wirken und sodass von dem Steg (3) in Querrichtung (13) auf die Feder-Lenker-Einrichtung (1) wirkende Kräfte auf die Endbereiche (15) übertragen werden.

2. Feder-Lenker-Einrichtung (1) gemäß Anspruch 1, **dadurch gekennzeichnet, dass** die Gurte (2) einen im Wesentlichen gleichmäßigen oder dem Spannungsverlauf angepassten Überstand (18) über einander gegenüberliegenden Stegflächen (19) des Stegs (3) aufweisen.

3. Feder-Lenker-Einrichtung (1) gemäß Anspruch 1 oder Anspruch 2, **dadurch gekennzeichnet, dass** die Fasern (8) des zweiten Faserverbundwerkstoffs (7) gekreuzt zueinander verlaufen.

4. Feder-Lenker-Einrichtung (1) gemäß einem der voranstehenden Ansprüche, **dadurch gekennzeichnet, dass** in den Endabschnitten (9) des Stegs (3) stabförmig ausgestaltete Pfosten (10) mit in Längsrichtung der Pfosten bzw. in Querrichtung (13) der Feder-Lenker-Einrichtung (1) unidirektional verlaufenden Fasern (12) angeordnet sind.

5. Feder-Lenker-Einrichtung (1) gemäß einem der voranstehenden Ansprüche, **dadurch gekennzeichnet, dass** die Gurte (2) und der Steg (3) in einer vorgespannten Position miteinander verbunden werden, sodass die Feder-Lenker-Einrichtung (1) in einem unbelasteten Zustand einen S-Profil-förmigen Querschnitt längs einer die Endbereiche (15) verbindenden Mittelachse aufweist.

6. Feder-Lenker-Einrichtung (1) gemäß einem der voranstehenden Ansprüche, **dadurch gekennzeichnet, dass** die Gurte (2) trapezförmig unter einem Trapezwinkel (17) zueinander ausgerichtet sind.

7. Feder-Lenker-Einrichtung (1) gemäß einem der voranstehenden Ansprüche, **dadurch gekennzeichnet, dass** eine Federkennlinie der Feder-Lenker-Einrichtung (1) linear bis progressiv ist.

8. Radaufhängung (27) mit mindestens einer Feder-Lenker-Einrichtung (1) gemäß einem der voranstehenden Ansprüche, wobei ein Endbereich (15) der Feder-Lenker-Einrichtung (1) an einem Radträger (29) der Radaufhängung (27) festgelegt ist und ein dem festgelegten Endbereich (15) gegenüberliegender Endbereich (15) mit einem Fahrgestell eines Fahrzeugs verbunden werden kann.

9. Radaufhängung (27) gemäß Anspruch 8, **dadurch gekennzeichnet, dass** die Radaufhängung (27) eine Dämpfungseinrichtung (30) aufweist, wobei die Dämpfungseinrichtung (30) an dem Radträger (29) schwenkbar gelagert angeordnet ist und mit dem Fahrgestell verbunden werden kann, wobei die Dämpfungseinrichtung (30) eine Feder (31) mit einer nichtlinearen Federkennlinie aufweist, die so ausgestaltet und angeordnet ist, dass ein Anschlagen der Dämpfungseinrichtung (30) an Endanschlägen (32) der Dämpfungseinrichtung (30) vermieden wird.

10. Radaufhängung (27) gemäß Anspruch 8 oder Anspruch 9, **dadurch gekennzeichnet, dass** die Feder-Lenker-Einrichtung (1) als Querstabilisator und/oder als Längsstabilisator dient.

11. Radaufhängung (27) gemäß einem der Ansprüche 7 bis 10, **dadurch gekennzeichnet, dass** die Radaufhängung (27) zwei Feder-Lenker-Einrichtungen (1) aufweist, die beabstandet zueinander an dem Radträger (29) so angeordnet und ausgestaltet sind, dass die Feder-Lenker-Einrichtungen (1) als Längslenker, oberer Querlenker, unterer Querlenker, Stabilisator und Feder wirken.

## Claims

1. Spring arm device (1) for a motor vehicle comprising two flanges (2) arranged at a distance from each other and which are made of a first fiber composite material (4) with fibers (6) each oriented in a longitudinal direction (5) of the flanges (2) and having a web (3) which connects the flanges (2) and which is made of a second fiber composite material (7) with the fibers (8) oriented at positive angles to the longitudinal directions (5) of the flanges (2), wherein the spring arm device (1) can be fastened in opposite end regions (15) to vehicle parts as part of a wheel suspension (27), wherein the end regions (15) comprise end segments (14) of the two flanges (2) associated to one other and in each case one end segment (9) of the web (3) which connects the end segments (14) of the flanges (2), so that forces introduced into the spring arm device (1) in the longitudinal direction via the end regions (15) can in each case be transmitted, so that the flanges (2) counteract deformation of the spring arm device (1) caused by forces acting in a normal direction (16) of the web (3) by means of a spring force and so that forces acting on the spring arm device (1) in a transverse direction (13) are transmitted from the web (3) to the end regions (15).

2. Spring arm device (1) according to claim 1, **characterized in that** the flanges (2) have a protrusion (18) over opposite web surfaces (19) of the web (3) that is substantially uniform or adapted to the tensile course.

3. Spring arm device (1) according to claim 1 or claim 2, **characterized in that** the fibers (8) of the second fiber composite material (7) run crossed to one another.

4. Spring arm device (1) according to one of the preceding claims, **characterized in that** posts (10) configured as rods are arranged in end portions (9) of the web (3) with the fibers (12) running uni-directionally in the longitudinal direction of the posts or in the transverse direction (13) of the spring arm device (1).

5. Spring arm device (1) according to one of the preceding claims, **characterized in that** the flanges (2) and the web (3) are connected to each other in a pre-stressed position so that the spring arm device (1) has an S-profile-shaped cross section along a center axis connecting the end regions (15) in an unstressed state.

6. Spring arm device (1) according to one of the preceding claims, **characterized in that** the flanges (2) are aligned to one other at a trapezoidal angle (17).

7. Spring arm device (1) according to one of the preceding claims, **characterized in that** a spring characteristic of the spring arm device (1) is linear to progressive.

8. Wheel suspension (27) having at least one spring arm device (7) according to one of the preceding claims, wherein an end region (15) of the spring arm device (1) is fastened to a wheel carrier (29) of the wheel suspension (27) and an end region (15) opposite the fastened end region (15) can be connected to the chassis of a vehicle.

9. Wheel suspension (27) according to claim 8, **characterized in that** the wheel suspension (27) comprises a damping device (30),
wherein the damping device (30) is arranged on the wheel carrier (29) in a pivotable manner and can be connected to the chassis, wherein the damping device (30) comprises a spring (31) having a non-linear spring characteristic, which is configured and arranged in such a way that the damping device (30) is prevented from butting against end stops (32) of the damping device (30).

10. Wheel suspension (27) according to claim 8 or claim 9, **characterized in that** the spring arm device (1) serves as a transverse stabilizer and/or longitudinal stabilizer.

11. Wheel suspension (27) according to one of claims 7 to 10, **characterized in that** the wheel suspension (27) comprises two spring arm devices (1), which are arranged spaced from one another on the wheel carrier (29) and configured in such a way that the spring arm devices (1) act as a trailing arm, upper control arm, lower control arm, stabilizer and spring.

## Revendications

1. Dispositif à ressort/bras oscillant (1) pour un véhicule automobile, comprenant deux sangles (2) disposées à distance l'une de l'autre, constituées d'un premier matériau composite en fibres (4), avec des fibres (6) respectivement orientées en direction longitudinale (5) des sangles (2), et avec une nervure (3) reliant les sangles (2), constituée d'un deuxième matériau composite en fibres (7), avec des fibres (8) orientées dans des angles positifs par rapport aux directions longitudinales (5) des sangles (2), le dispositif à ressort/bras oscillant (1), dans des parties terminales (15) opposées, pouvant être fixé sur des pièces de véhicule automobile en tant que partie d'une suspension de roue (27), les parties terminales (15) comprenant des sections terminales (14), associées les unes aux autres, des deux sangles (2) et respectivement une section terminale (9) de la nervure (3), reliant les sections terminales (14) des sangles (2), de sorte que des forces introduites dans le dispositif à ressort/bras oscillant (1) par les sangles (2) respectivement en direction longitudinale (5) par l'intermédiaire des parties terminales (15) peuvent être transmises, de sorte que les sangles (2) empêchent, au moyen d'une force de ressort, une déformation causée par des forces agissant dans une direction normale (16) de la nervure (3), et de sorte que les forces agissant sur le dispositif à ressort/bras oscillant (1) en direction transversale (13) par la nervure (3) sont transmises sur les parties terminales (15).

2. Dispositif à ressort/bras oscillant (1) selon la revendication 1, **caractérisé en ce que** les sangles (2) présentent une saillie (18), essentiellement régulière ou adaptée à l'allure de tension, sur des surfaces de nervure (19), opposées les unes aux autres, de la nervure (3).

3. Dispositif à ressort/bras oscillant (1) selon la revendication 1 ou la revendication 2, **caractérisé en ce que** les fibres (8) du deuxième matériau composite en fibres (7) s'étendent de manière croisée les unes par rapport aux autres.

4. Dispositif à ressort/bras oscillant (1) selon l'une quelconque des revendications précédentes, **caractérisé en ce que** dans les sections terminales (9) de la nervure (3) sont disposés des poteaux (10) conçus en forme de barre, avec des fibres (12) s'étendant de manière unidirectionnelle dans le sens longitudinal des poteaux, respectivement dans le sens transversal (13) du dispositif à ressort/bras oscillant (1).

5. Dispositif à ressort/bras oscillant (1) selon l'une quelconque des revendications précédentes, **caractérisé en ce que** les sangles (2) et la nervure (3) sont reliées entre elles dans une position précontrainte, de sorte que le dispositif à ressort/bras oscillant (1), dans un état non chargé, présente une section transversale à profil en forme de S le long d'un axe médian reliant les sections terminales (15).

6. Dispositif à ressort/bras oscillant (1) selon l'une quelconque des revendications précédentes, **caractérisé en ce que** les sangles (2) sont orientées en forme de trapèze les unes par rapport aux autres dans un angle trapézoïdal (17).

7. Dispositif à ressort/bras oscillant (1) selon l'une quelconque des revendications précédentes, **caractérisé en ce qu'**une courbe caractéristique de ressort du dispositif à ressort/bras oscillant (1) est linéaire à progressive.

8. Suspension de roue (27) comprenant au moins un dispositif à ressort/bras oscillant (1) selon l'une quelconque des revendications précédentes, une partie terminale (15) du dispositif à ressort/bras oscillant (1) étant fixée sur un support de roue (29) de la suspension de roue (27) et une partie terminale (15) opposée à la partie terminale fixée (15) pouvant être reliée au châssis d'un véhicule.

9. Suspension de roue (27) selon la revendication 8, **caractérisée en ce que** la suspension de roue (27) présente un dispositif d'amortissement (30), le dispositif d'amortissement (30) étant disposé en étant logé de manière pivotante sur le support de roue (29) et pouvant être relié au châssis, le dispositif d'amortissement (30) présentant un ressort (31) ayant une courbe caractéristique de ressort non linéaire, lequel est conçu et disposé de manière à ce qu'un heurt du dispositif d'amortissement (30) contre des butées terminales (32) du dispositif d'amortissement (30) soit évité.

10. Suspension de roue (27) selon la revendication 8 ou la revendication 9, **caractérisée en ce que** le dispositif à ressort/bras oscillant (1) sert de barre stabilisatrice et/ou de stabilisateur longitudinal.

11. Suspension de roue (27) selon l'une quelconque des revendications 7 à 10, **caractérisée en ce que** la suspension de roue (27) présente deux dispositifs à ressort/bras oscillant (1) qui sont disposés à distance l'un de l'autre sur le support de roue (29) et sont conçus de manière à que les dispositifs à ressort/bras oscillant (1) agissent comme bras oscillant longitudinal, bras triangle supérieur, bras triangle inférieur, stabilisateur et ressort.
